# FASCICULE DE BREVET EUROPEEN

(11) **EP 3 490 882 B1**
(45) Date de publication et mention de la délivrance du brevet: **23.03.2022**
(21) Numéro de dépôt: 17734125.2
(22) Date de dépôt: 04.07.2017
(51) Int. Cl.: B63B 39/06

(54) **SUPPORT FLOTTANT COMPORTANT UN FLOTTEUR ET UNE PLAQUE D'AMORTISSEMENT MUNIE D'UNE RANGEE D'ORIFINES**
SCHWIMMENDE TRAGSTRUKTUR MIT EINEM SCHWIMMER UND EINER DÄMPFUNGSPLATTE MIT EINER REIHE VON ÖFFNUNGEN
FLOATING SUPPORT STRUCTURE COMPRISING A FLOATER AND A DAMPING PLATE WITH A ROW OF APERTURES

(30) Priorité: 26.07.2016 FR 1657172
(43) Date de publication de la demande: 05.06.2019
(73) Titulaire: IFP Energies nouvelles, 92852 Rueil-Malmaison (FR)
(72) Inventeur: EMERY, Adrien, 92500 Rueil-Mamaison (FR); BOZONNET, Pauline, 69003 Lyon (FR); POIRETTE, Yann, 38121 Reventin-Vaugris (FR); PERDRIZET, Timothee, 69007 Lyon (FR)
(74) Mandataire: IFP Energies nouvelles
(86) Numéro de dépôt international: PCT/EP2017/066668
(87) Numéro de publication internationale: WO 2018/019526

(56) Documents cités:
- WO-A1-2014/184454
- WO-A2-2009/131826
- CN-A- 1 857 961
- CN-U- 204 415 681
- CN-Y- 201 347 195
- JP-A- S54 108 392
- JP-A- 2008 062 677

## Description

La présente invention concerne le domaine des supports flottants amarrés en mer (« offshore en particulier une éolienne marine ou offshore comportant une éolienne et au moins un flotteur principal.

Dans le cas des éoliennes offshore, le support flottant supporte, en partie émergée, l'éolienne composée des pales, du rotor, de la nacelle et du mat fixé sur le support flottant. Ces supports flottants peuvent être ancrés au sol marin par des lignes d'ancrage tendues, semi-tendues ou des lignes d'ancrage caténaires. Le support flottant a pour but d'apporter la flottabilité et la stabilité de l'éolienne, de manière à reprendre les efforts exercés sur celle-ci, tout en limitant les mouvements de l'ensemble.

Divers supports flottants dédiés à l'installation d'éoliennes de plusieurs mégawatts au large des côtes sont en cours de développement dans de nombreux pays. Selon la profondeur du site considéré, plusieurs options de conception sont envisageables. Malgré leur grande diversité, plusieurs familles de support flottant se dégagent. On peut citer :
- les flotteurs de type SPAR (de l'anglais « Single Point Anchor Reservoir » signifiant réservoir avec unique point d'ancrage), caractérisés par une forme géométrique élancée et comportant un ballast important afin d'abaisser au maximum le centre de gravité de l'ensemble de la structure, et ainsi d'assurer la stabilité (on parle alors de stabilité de masse),
- les flotteurs de type barge : ce sont des supports à faible tirant d'eau et très larges. Leur stabilité est assurée par leur large surface de flottaison (on parle alors de stabilité de forme). Cependant, ce type de support est très sensible à la houle.
- les supports de type TLP (de l'anglais « Tension Leg Platform » qui peut être traduit par plateforme à lignes tendues), qui ont la particularité d'être amarrés au fond de la mer par des lignes tendues garantissant la stabilité de la structure,
- les flotteurs de type semi-submersible : ce sont des supports constitués d'au moins trois flotteurs reliés par des bras afin d'en assurer la rigidité. Ces supports ont en général un faible déplacement et présentent une inertie de la surface de flottaison importante, leur procurant ainsi un couple de redressement suffisant à leur stabilité. De plus, ce type de flotteur est moins sensible à la houle que les barges.

Pour toutes les familles de support flottant, les critères principaux de conception sont la stabilité, le contre-balancement de la force de poussée due au vent et la limitation des mouvements du support flottant.

Afin d'assurer la stabilité et de faibles mouvements du support flottant, une solution consiste à utiliser une plaque d'amortissement (en anglais « heave plate »), également appelée plaque amortisseur ou jupe, au niveau du flotteur du support flottant. La plaque d'amortissement dépasse du flotteur pour permettre d'amortir notamment les mouvements de pilonnement, mais aussi de tangage et roulis, du support flottant.

La demande de brevet FR 3005698 (WO 2014/184454) décrit un tel exemple de support flottant pourvu d'une plaque d'amortissement, dans le cadre d'un support flottant pour éolienne offshore. Toutefois, l'amortissement n'est pas optimal avec les configurations proposées dans cette demande de brevet.

Pour pallier ces inconvénients, la présente invention concerne une éolienne marine comportant une éolienne et un support flottant, le support flottant comportant au moins un flotteur principal et au moins une plaque d'amortissement, la surface de la section horizontale de ladite plaque d'amortissement étant supérieure à la surface Sc de ladite section horizontale dudit flotteur principal, ladite plaque d'amortissement étant fixée audit flotteur principal, et ladite plaque d'amortissement comportant une pluralité d'orifices, et caractérisée en ce que lesdits orifices sont régulièrement répartis de manière à former une unique rangée d'orifices, ladite rangée d'orifices étant parallèle à la périphérie extérieure de ladite plaque d'amortissement, en ce que la section horizontale de ladite plaque d'amortissement est variable avec la profondeur, et en ce que la plaque d'amortissement possède une surface minimale de la section horizontale strictement supérieure à la surface Sc de la section horizontale du flotteur principal, de sorte que seule la périphérie de la plaque d'amortissement est variable en épaisseur.

### Le dispositif selon l'invention

L'invention concerne un support flottant comportant au moins un flotteur principal et au moins une plaque d'amortissement, la surface de la section horizontale de ladite plaque d'amortissement étant supérieure à la surface Sc de ladite section horizontale dudit flotteur principal, ladite plaque d'amortissement étant fixée audit flotteur principal, et ladite plaque d'amortissement comportant une pluralité d'orifices. Lesdits orifices sont régulièrement répartis de manière à former une unique rangée d'orifices, ladite rangée d'orifices étant parallèle à la périphérie extérieure de ladite plaque d'amortissement.

Selon un mode de réalisation, lesdits orifices sont sensiblement circulaires, trapézoïdaux, ou rectangulaires.

Conformément à une mise en œuvre, la porosité de ladite plaque d'amortissement au niveau de ladite rangée d'orifices est comprise entre 0,1 et 10%.

Selon un aspect de l'invention, ladite plaque d'amortissement comporte une pluralité de crans et/ou de saillies régulièrement répartis sur sa périphérie extérieure.

De préférence, lesdits crans et/ou lesdites saillies sont sensiblement rectangulaires.

Avantageusement, ladite plaque d'amortissement est fixée à la base dudit flotteur principal.

Conformément à une caractéristique, ladite plaque d'amortissement comporte au moins un raidisseur, ledit raidisseur étant agencé du centre vers la périphérie extérieure de ladite plaque d'amortissement.

De manière avantageuse, la section horizontale de ladite plaque d'amortissement est variable avec la profondeur.

Selon un mode de réalisation de l'invention, ladite plaque d'amortissement est réalisée en acier ou en béton.

Selon une caractéristique, ladite plaque d'amortissement comporte une section horizontale sensiblement circulaire, hexagonale, ou carrée.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1 illustre un support flottant selon un premier mode de réalisation de l'invention.
La figure 2 illustre un support flottant selon un deuxième mode de réalisation de l'invention.
Les figures 3a et 3b illustrent deux variantes de réalisation du support flottant selon le premier mode de réalisation de l'invention.
La figure 4 illustre un support flottant selon un troisième mode de réalisation de l'invention.

### Description détaillée de l'invention

La présente invention concerne un support flottant utilisé comme fondation pour une éolienne en mer (« offshore »), D'autres domaines, tels que la récupération d'hydrocarbures en mer, et la récupération d'une énergie marine (énergie thermique, de la houle, des courants.. ne sont pas revendiqués.

Le support flottant selon l'invention peut être de la famille des flotteurs de type SPAR, de type barge, de type TLP, ou de type semi-submersible (par exemple du type tri-flotteurs).

Le support flottant comporte au moins un flotteur principal et au moins une plaque d'amortissement. Le flotteur principal apporte la flottabilité du support flottant. Le support flottant peut comprendre un ou plusieurs flotteurs principaux reliés entre eux. Le flotteur principal peut avoir, de manière non limitative, sensiblement une forme allongée : la hauteur (selon l'axe vertical en utilisation normale du support flottant) peut être équivalente ou supérieure aux autres dimensions horizontales du flotteur principal. Le flotteur principal peut avoir une forme quelconque, notamment une forme parallélépipédique, cylindrique, prismatique, conique, tronconique etc. La surface de la section horizontale du flotteur principal est notée Sc. On appelle section horizontale, la section du flotteur principal (ou de la plaque d'amortissement) coupée par un plan horizontal, lorsque le support flottant est en position « normale » d'utilisation, notamment sans poussée du vent. Pour un exemple de réalisation, pour lequel le flotteur principal a une forme cylindrique, la section horizontale est circulaire. Le flotteur principal peut être réalisé en acier ou en béton. Afin d'assurer la flottabilité, le flotteur principal peut comporter au moins un volume interne rempli d'air.

Selon l'invention, la plaque d'amortissement est fixée sur le flotteur principal. La plaque d'amortissement a une faible épaisseur (hauteur selon l'axe vertical lorsque le support flottant est en position « normale » d'utilisation) par rapport aux autres dimensions de la plaque, selon la position d'utilisation du support flottant. Selon l'invention, la plaque d'amortissement comporte une pluralité d'orifices. Les orifices sont sensiblement verticaux, lorsque que le support flottant est en position « normale » d'utilisation, par exemple sans poussée du vent. Alternativement, les orifices peuvent être sensiblement inclinés par rapport à la direction verticale. Les orifices sont régulièrement répartis sur la plaque d'amortissement de manière à former une unique rangée d'orifices. Cette unique rangée d'orifices est sensiblement parallèle à la périphérie extérieure de ladite plaque d'amortissement. En d'autres termes, la rangée possède une forme sensiblement identique à celle de la plaque. Par exemple, si la plaque d'amortissement est circulaire, alors la rangée d'orifices est circulaire, ou si la plaque d'amortissement est hexagonale, alors la rangée d'orifices est hexagonale, etc. Les orifices permettent le passage du liquide (eau de mer) au travers de la plaque d'amortissement. De plus, la présence d'orifices permet de limiter la baisse du terme de masse d'eau ajoutée propre aux jupes annulaires et poreuses, tout en conservant un gain en amortissement conséquent. En outre, les plaques d'amortissement selon l'invention sont plus simples à réaliser qu'une jupe poreuse avec un grand nombre d'orifices sur toute la surface.

La plaque d'amortissement peut être réalisée en béton ou en métal, notamment en acier. La plaque d'amortissement peut comporter des renforts, reliant le flotteur principal et la plaque d'amortissement. Ces renforts, également appelés raidisseurs, peuvent être utilisés notamment lorsque la plaque d'amortissement est réalisée en métal. Ces renforts peuvent être perpendiculaires à la plaque d'amortissement. De plus, les renforts peuvent avoir une épaisseur qui varie avec la profondeur. Ces renforts permettent d'augmenter la résistance de la plaque d'amortissement.

Les différents modes de réalisation décrits ci-dessous peuvent être combinés de manière à combiner leurs effets.

Conformément à un mode de réalisation de l'invention, les orifices peuvent être formés par des trous traversant la plaque d'amortissement. Les trous peuvent être formés par perçage, ou tout moyen analogue.

Selon une alternative, les orifices peuvent être délimités par deux pièces annulaires et des raidisseurs (renforts). Par exemple, un espacement peut être prévu entre la périphérie du flotteur principal et le contour interne de la plaque d'amortissement, et cet espacement peut être divisé en plusieurs orifices par des raidisseurs, qui relient le flotteur principal et la plaque d'amortissement. Dans ce cas, la plaque d'amortissement est dite annulaire. Les raidisseurs peuvent être orientés du centre du flotteur principal vers la périphérie de la plaque d'amortissement. Les raidisseurs peuvent être formés par des plaques métalliques. Les raidisseurs peuvent être perpendiculaires à la plaque d'amortissement.

Les orifices peuvent avoir différentes formes : circulaires, rectangulaires, triangulaires, hexagonales etc. De préférence, les orifices peuvent être sensiblement circulaires lorsqu'ils sont formés par des trous traversant la plaque d'amortissement, et les orifices peuvent être sensiblement trapézoïdaux lorsqu'ils sont délimités par une plaque d'amortissement annulaire et des raidisseurs. Les rayons des orifices circulaires peuvent être compris entre 0,1 et 2m. Les dimensions de ces trapèzes peuvent être comprises entre 0,1 et 2 m.

Selon un mode de réalisation de l'invention, tous les orifices ont une forme et des dimensions identiques.

Selon un mode de réalisation de l'invention, la plaque d'amortissement peut être fixée à la base du flotteur principal. Cette construction permet une conception simple du support flottant, tout en assurant un bon amortissement du support flottant et surtout une bonne stabilité du support.

Alternativement, la plaque d'amortissement peut être fixée en tout point du flotteur principal.

Conformément à une option de réalisation, le support flottant comporte une unique plaque d'amortissement. Cette construction permet de faciliter la conception du support flottant.

Alternativement, le support flottant peut comporter une pluralité de plaques d'amortissement fixées à plusieurs hauteurs du flotteur principal, de manière à optimiser l'amortissement du support flottant.

Selon un mode de réalisation de l'invention, la plaque d'amortissement et le flotteur sont centrés l'un par rapport à l'autre.

Selon un mode de réalisation, la plaque d'amortissement possède une section horizontale ayant une forme identique à celle de la section horizontale du flotteur principal, avec des dimensions supérieures. En d'autres termes, la section horizontale de la plaque d'amortissement peut être une homothétie de la section horizontale du flotteur principal. Par exemple, si le flotteur principal est cylindrique, alors la section horizontale de la plaque d'amortissement peut être circulaire. Selon un autre exemple, si le flotteur principal est parallélépipédique, alors la section horizontale de la plaque d'amortissement peut être rectangulaire. Selon un troisième exemple, si le flotteur principal a une section hexagonale, alors la section horizontale de la plaque d'amortissement peut être hexagonale.

Selon une alternative, la plaque d'amortissement peut avoir une forme différente de la forme du flotteur principal. Par exemple, le flotteur principal peut avoir une forme sensiblement cylindrique et la plaque d'amortissement une forme polygonale, par exemple hexagonale, et inversement.

En outre, si le support flottant est de type multi-flotteurs, par exemple tri-flotteurs, alors une plaque d'amortissement peut être prévue à la base de chacun des flotteurs, par exemple des trois flotteurs.

La rangée d'orifices peut être située en tout point de l'envergure de la plaque d'amortissement. On appelle envergure de la plaque d'amortissement, la distance minimale entre l'extrémité périphérique du flotteur principal, et l'extrémité périphérique de la plaque d'amortissement. Par exemple, si le flotteur principal et la plaque d'amortissement sont cylindriques, alors l'envergure correspond à la différence des rayons entre le flotteur principal et la plaque d'amortissement. Selon un autre exemple, si le flotteur principal et la plaque d'amortissement sont de section carré, alors l'envergure correspond à la moitié de la différences des côtés entre le flotteur principal et la plaque d'amortissement. Selon un premier exemple, la rangée d'orifices peut se trouver à une distance de la périphérie extérieure de la plaque d'amortissement proche de 100 % de l'envergure de la plaque d'amortissement. Selon un deuxième exemple, la rangée d'orifices peut se trouver à une distance de la périphérie extérieure de la plaque d'amortissement proche de 50 % de l'envergure de la plaque d'amortissement. Selon un troisième exemple, la rangée d'orifices peut se trouver à une distance de la périphérie extérieure de la plaque d'amortissement proche de 10 % de l'envergure de la plaque d'amortissement.

Ainsi, une distance représentant 100 % de l'envergue depuis la périphérie extérieure de la plaque d'amortissement correspond à un agencement des orifices sur le pourtour du flotteur principal, ce qui implique que les orifices sont éloignés de la périphérie extérieure de la plaque d'amortissement. Cet agencement proche de 100 %, par exemple sensiblement comprise entre 70 et 100 % peut être adapté aux orifices formés par une plaque d'amortissement annulaire et des raidisseurs.

Selon un exemple de réalisation de l'invention, lorsque les orifices sont des trous traversant la plaque d'amortissement, les orifices peuvent être agencés sensiblement au centre de la plaque d'amortissement, c'est-à-dire à une distance de la périphérie extérieure représentant sensiblement de 40 à 60 % de l'envergure de la plaque d'amortissement.

Une distance représentant sensiblement 10 %, c'est-à-dire entre 1 et 30 %, depuis la périphérie extérieure de l'envergure de la plaque d'amortissement correspond à un agencement des orifices sur le pourtour de la plaque d'amortissement. Cette conception permet une meilleure résistance de la plaque d'amortissement.

Selon un mode de réalisation de l'invention, la porosité de la plaque d'amortissement est comprise entre 0,1 et 10 %, de manière à optimiser l'amortissement du support flottant. La porosité correspond au rapport de la surface laissant passer le liquide par rapport à la surface totale. La porosité peut être choisie en fonction des dimensions du flotteur principal et de la plaque d'amortissement.

Selon un mode de réalisation, la plaque d'amortissement peut avoir une section horizontale variable avec la profondeur, de manière à augmenter la stabilité et l'amortissement de la plaque d'amortissement. Ainsi, la plaque d'amortissement comporte une variation de son épaisseur avec la profondeur.

De plus, la plaque d'amortissement peut posséder une surface minimale de la section horizontale, notée Sd1, strictement supérieure à la surface Sc de la section horizontale du flotteur principal. Ainsi, seule la périphérie de la plaque d'amortissement peut être variable en épaisseur, et la périphérie de la plaque d'amortissement peut posséder une extrémité fine, c'est-à-dire dont l'épaisseur est réduite. Cette variation de l'épaisseur avec une surface minimale permet d'avoir une plaque d'amortissement résistante d'un point de vue structurel, et d'avoir une extrémité fine pour favoriser l'amortissement hydrodynamique.

Selon un aspect de l'invention, la plaque d'amortissement peut posséder une section horizontale croissante avec la profondeur. Ainsi, en position d'utilisation du support flottant, la plaque d'amortissement a une plus grande section à sa base, et une plus petite section à son sommet. De cette manière, la plaque d'amortissement s'affine avec la profondeur (son épaisseur diminue). Cette croissance de la section horizontale de la plaque d'amortissement, permet de générer une forme hydrodynamique, qui favorise l'amortissement du pilonnement, ainsi que du roulis et tangage. Cette construction présente l'avantage d'être facilement mise en œuvre.

En variante, la plaque d'amortissement peut posséder une section horizontale décroissante avec la profondeur. Ainsi, en position d'utilisation du support flottant, la plaque d'amortissement a une plus grande section à son sommet et une plus petite base. De cette manière, la plaque d'amortissement s'affine en son sommet (son épaisseur diminue). Cette décroissance de la section horizontale de la plaque d'amortissement permet de générer une forme hydrodynamique, qui favorise l'amortissement du pilonnement, du roulis et du tangage.

Alternativement, la forme de la plaque d'amortissement peut être composée de deux volumes tronconiques, dont les sections de plus grandes surfaces sont juxtaposées en son centre. Les deux volumes tronconiques ont, de préférence, des dimensions identiques. Ainsi, la section horizontale de la plaque d'amortissement croît, avec la profondeur, sur une première hauteur (correspondant à la partie supérieure de la plaque d'amortissement), puis décroît, avec la profondeur, sur une deuxième hauteur (correspondant à la partie inférieure de la plaque d'amortissement). Ainsi, la plaque d'amortissement a une plus grande section en son centre et des sections plus petites en sa base et en son sommet. Cette conception de la plaque d'amortissement permet de générer une forme hydrodynamique, qui favorise l'amortissement du pilonnement, du roulis et du tangage.

Selon un mode de réalisation de l'invention, afin d'assurer une bonne résistance du support flottant, l'envergure de la plaque d'amortissement peut être comprise entre 1 et 15 m, de préférence entre 3 et 10 m. Une telle envergure garantit des dimensions minimales de la plaque d'amortissement par rapport aux dimensions du flotteur principal, ce qui permet d'augmenter la résistance de celle-ci. Pour des raisons structurelles on se limite à une envergure de 12 m de jupe, voire 10 m si le rayon du cylindre principal est lui-même important (typiquement 12 m).

Selon un exemple non limitatif de réalisation, à la racine de la plaque d'amortissement, une épaisseur de la plaque d'amortissement, ou le cas échéant des renforts, peut être supérieure ou égale à 1.5 m. En d'autres termes, selon cet exemple, l'épaisseur de la plaque d'amortissement au niveau de la périphérie du flotteur principal peut être supérieure ou égale à 1,5 m. Cette épaisseur de la racine de la plaque d'amortissement permet de garantir une résistance optimisée de la plaque d'amortissement.

Conformément à une option de réalisation de l'invention, la plaque d'amortissement peut comprendre une pluralité de crans et/ou de saillies régulièrement répartis sur sa périphérie. De cette manière, il est possible d'augmenter la circonférence de la plaque d'amortissement, ce qui a pour effet d'augmenter la zone où le détachement tourbillonnaire a lieu, sans pour autant augmenter la surface de la plaque d'amortissement. Les crans et/ou les saillies peuvent être de toutes formes, notamment rectangulaires, demi-circulaires, sinusoïdales etc. Les crans peuvent être formés notamment par usinage de la plaque d'amortissement.

Selon une conception, le support flottant peut comprendre des moyens de ballastage permanent. Ces moyens de ballastage permanent peuvent être situés à la base du flotteur principal, par exemple au-dessus de la plaque d'amortissement. Le ballast permanent permet l'équilibre hydrostatique du support flottant. Il peut être constitué de béton, d'eau de mer, ou de toute matière solide ou liquide pesante. Les masses de ces différentes matières peuvent être réparties pour satisfaire à la fois des critères de stabilité statique et dynamique mais aussi pour diminuer le coût de fabrication du support flottant.

Selon une caractéristique, le support flottant peut comprendre au moins un, de préférence plusieurs, caissons de ballastage dynamique, dont le volume peut être ballasté ou dé-ballasté en fonction des conditions d'utilisation du support flottant. Le ballast utilisé dans ces caissons peut être notamment de l'eau de mer. Ces caissons de ballastage dynamique peuvent être inclus dans le flotteur principal, par exemple au-dessus de la plaque d'amortissement, et le cas échéant au-dessus des moyens de ballastage permanent. Les caissons de ballastage dynamique permettent de corriger et régler l'angle d'assiette du support flottant, et donc l'axe du système agencé sur le support flottant. Les caissons de ballastage dynamique peuvent être situés à l'intérieur du flotteur principal dans sa partie périphérique.

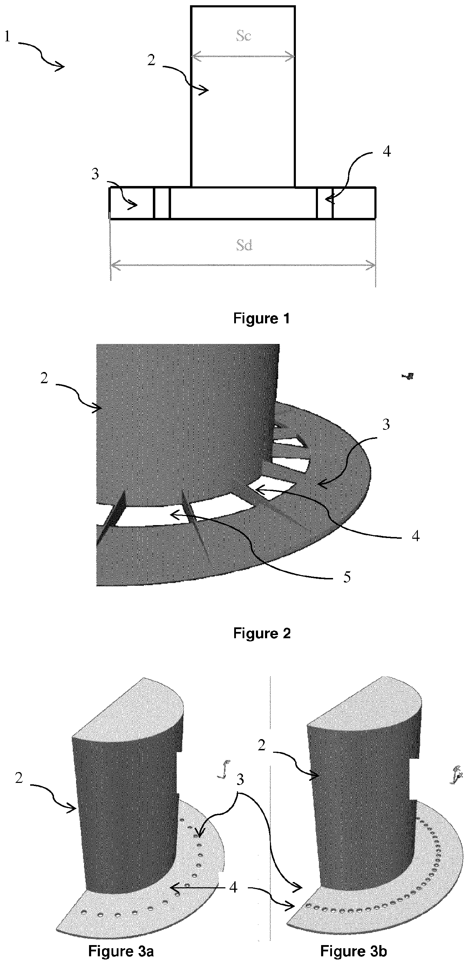

La figure 1 illustre, de manière schématique et non limitative, un support flottant selon un premier mode de réalisation, non revendiqué. La figure 1 est vue en coupe d'un support flottant 1. Le support flottant 1 comporte un flotteur principal 2 sensiblement cylindrique, et de surface de section horizontale Sc. Le support flottant 1 comporte également une plaque d'amortissement 3 fixée à la base du flotteur principal 2. La plaque d'amortissement 3 a une forme sensiblement cylindrique. La surface de la section horizontale de la plaque d'amortissement 3 est strictement supérieure à la surface de la section horizontale du flotteur principal. La plaque d'amortissement 3 comporte une pluralité d'orifices 4. La rangée d'orifices 4 est également circulaire. Les orifices 4 sont sensiblement circulaires. Les orifices 4 sont des trous agencés sensiblement à une distance de la périphérie extérieure de la plaque d'amortissement 3 correspondant à deux tiers de l'envergure de la plaque d'amortissement.

La figure 2 illustre, de manière schématique et non limitative, un support flottant selon l'invention. La figure 2 est une vue partielle tridimensionnelle du support flottant. Le support flottant comporte un flotteur principal 2 sensiblement cylindrique. Le support flottant comporte également une plaque d'amortissement 3 fixée à la base du flotteur principal 2. La plaque d'amortissement 3 est cylindrique. De plus, la plaque d'amortissement 3 est annulaire : un espacement annulaire est prévu entre le flotteur principal 2 et la plaque d'amortissement 3. Des raidisseurs 5 sont prévus pour relier le flotteur principal 2 et la plaque d'amortissement 3. Les raidisseurs 5 sont radiaux par rapport au flotteur principal 2 et à la plaque d'amortissement 3. Les orifices 4 sont formés dans cet espacement, et sont limités par le flotteur principal 2, la plaque d'amortissement 3 et deux raidisseurs 5 consécutifs. Ainsi les orifices ont sensiblement une forme trapézoïdale. De cette manière, la rangée d'orifices 4 est circulaire. De plus, la distance entre les orifices 4 et la périphérie extérieure de la plaque d'amortissement 3 est proche de 100 % de l'envergure de la plaque d'amortissement.

Les figures 3a et 3b illustrent, de manière schématique et non limitative, deux variantes de réalisation du premier mode de réalisation (cf. figure 1). Les figures 3a et 3b sont des vues tridimensionnelles représentant la moitié d'un support flottant. Pour les deux figures 3a et 3b, le support flottant comporte un flotteur principal 2 sensiblement cylindrique. Le support flottant comporte également un plaque d'amortissement 3 fixée à la base du flotteur principal 2. La plaque d'amortissement 3 est sensiblement cylindrique. La surface de la section horizontale de la plaque d'amortissement 3 est strictement supérieure à la surface de la section horizontale du flotteur principal. La plaque d'amortissement 3 comporte une rangée d'orifices 4. Les orifices 4 sont sensiblement circulaires. La rangée d'orifices 4 est circulaire. Les orifices 4 sont placés sensiblement au milieu de l'envergure de la plaque d'amortissement 3. Sur la figure 3a, les orifices 4 sont plus espacés que sur la figure 3b. Ainsi, la porosité de la plaque d'amortissement 3 est supérieure pour la variante de réalisation de la figure 3b par rapport à la variante de réalisation de la figure 3a.

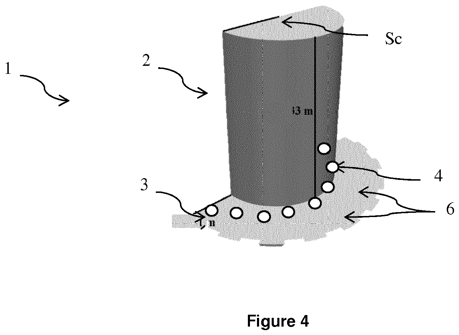

La figure 4 illustre, de manière schématique et non limitative un support flottant selon un troisième mode de réalisation. La figure 4 est une vue tridimensionnelle représentant la moitié d'un support flottant. Le support flottant 1 comporte un flotteur principal 2 sensiblement cylindrique, et de section horizontale Sc. Le support flottant 1 comporte également une plaque d'amortissement 3 fixée à la base du flotteur principal 2. Sur cette figure, l'épaisseur de la plaque d'amortissement n'est pas représentée. La surface de la section horizontale de la plaque d'amortissement 3 est strictement supérieure à la surface de la section horizontale du flotteur principal. La plaque d'amortissement 3 est sensiblement cylindrique (non représenté). La plaque d'amortissement comporte une rangée d'orifices 4. Les orifices 4 sont sensiblement circulaires. Les orifices 4 sont agencés sensiblement au milieu de l'envergure de la plaque d'amortissement 3. En outre, la plaque d'amortissement 3 comporte une pluralité de crans 6, formés dans la périphérie de la plaque d'amortissement 3. Les crans 6 sont répartis régulièrement sur cette périphérie. Les crans ont sensiblement une forme rectangulaire. La plaque d'amortissement 3 peut comporter entre 5 et 30 crans 6.

L'invention est telle que revendiquée, mais d'autres conceptions peuvent être envisagées. Par exemple, le mode de réalisation de la figure 2 peut être combiné au mode de réalisation de la figure 4. Selon une autre conception, pour tous les modes de réalisation illustrés, le flotteur principal et la plaque d'amortissement peuvent être de forme rectangulaire, carré ou hexagonal, etc. Selon d'autres caractéristiques, les plaques d'amortissement des modes de réalisation illustrés peuvent être tronconiques.

La présente invention concerne également une installation d'éolienne sur une étendue d'eau (mer par exemple). L'installation comprend une éolienne à axe vertical ou à axe horizontal, et un support flottant selon l'une quelconque des combinaisons de variantes décrites précédemment. Par exemple, une éolienne à axe horizontal est composée de pales, du rotor, de la nacelle et du mat fixé sur le support flottant. Le support flottant peut être ancré au sol marin par des lignes d'ancrage tendues, semi-tendues ou des lignes d'ancrage caténaires. Le support flottant a pour but d'apporter la flottabilité et la stabilité de l'éolienne, de manière à reprendre les efforts exercés sur celle-ci, contrebalancer la poussée due au vent, tout en limitant les mouvements de l'ensemble.

## Revendications

1. Eolienne marine comportant une éolienne et un support flottant (1), le support flottant (1) comportant au moins un flotteur principal (2) et au moins une plaque d'amortissement (3), la surface de la section horizontale de ladite plaque d'amortissement (3) étant supérieure à la surface Sc de ladite section horizontale dudit flotteur principal (2), ladite plaque d'amortissement (3) étant fixée audit flotteur principal (2), et ladite plaque d'amortissement (3) comportant une pluralité d'orifices (4), **caractérisée en ce que** lesdits orifices (4) sont régulièrement répartis de manière à former une unique rangée d'orifices (4), ladite rangée d'orifices (4) étant parallèle à la périphérie extérieure de ladite plaque d'amortissement (3), **en ce que** la section horizontale de ladite plaque d'amortissement (3)(3) est variable avec la profondeur et **en ce que** la plaque d'amortissement (3) possède une surface minimale de la section horizontale strictement supérieure à la surface Sc de la section horizontale du flotteur principal (2), de sorte que seule la périphérie de la plaque d'amortissement est variable en épaisseur.

2. Eolienne marine selon la revendication 1, dans laquelle lesdits orifices (4) sont sensiblement circulaires, trapézoïdaux, ou rectangulaires.

3. Eolienne marine selon l'une des revendications précédentes, dans laquelle la porosité de ladite plaque d'amortissement (3) au niveau de ladite rangée d'orifices est comprise entre 0,1 et 10%.

4. Eolienne marine selon l'une des revendications précédentes, dans laquelle ladite plaque d'amortissement (3) comporte une pluralité de crans (6) et/ou de saillies régulièrement répartis sur sa périphérie extérieure.

5. Eolienne marine selon la revendication 4, dans laquelle lesdits crans (6) et/ou lesdites saillies sont sensiblement rectangulaires.

6. Eolienne marine selon l'une des revendications précédentes, dans laquelle ladite plaque d'amortissement (3) est fixée à la base dudit flotteur principal (2).

7. Eolienne marine selon l'une des revendications précédentes, dans laquelle ladite plaque d'amortissement (3) comporte au moins un raidisseur (5), ledit raidisseur (5) étant agencé du centre vers la périphérie extérieure de ladite plaque d'amortissement (3).

8. Eolienne marine selon l'une des revendications précédentes, dans laquelle ladite plaque d'amortissement (3) est réalisée en acier ou en béton.

9. Eolienne marine selon l'une des revendications précédentes, dans laquelle ladite plaque d'amortissement (3) comporte une section horizontale sensiblement circulaire, hexagonale, ou carrée.

## Patentansprüche

1. Offshore-Windenergieanlage, die eine Windenergieanlage und eine schwimmende Tragstruktur (1) umfasst, wobei die schwimmende Tragstruktur (1) mindestens einen Hauptschwimmer (2) und mindestens eine Dämpfungsplatte (3) umfasst, wobei die Fläche des horizontalen Querschnitts der Dämpfungsplatte (3) größer als die Fläche Sc des horizontalen Querschnitts des Hauptschwimmers (2) ist, wobei die Dämpfungsplatte (3) an dem Hauptschwimmer (2) befestigt ist und wobei die Dämpfungsplatte (3) eine Vielzahl von Öffnungen (4) umfasst, **dadurch gekennzeichnet, dass** die Öffnungen (4) regelmäßig verteilt sind, sodass sie eine einzige Reihe von Öffnungen (4) bilden, wobei die Reihe von Öffnungen (4) zu dem Außenumfang der Dämpfungsplatte (3) parallel ist, dass der horizontale Querschnitt der Dämpfungsplatte (3)(3) mit der Tiefe veränderlich ist und dass die Dämpfungsplatte (3) eine Mindestfläche des horizontalen Querschnitts besitzt, die in jedem Fall größer als die Fläche Sc des horizontalen Querschnitts des Hauptschwimmers (2) ist, sodass nur der Umfang der Dämpfungsplatte hinsichtlich der Stärke veränderlich ist.

2. Offshore-Windenergieanlage nach Anspruch 1, wobei die Öffnungen (4) im Wesentlichen kreisförmig, trapezförmig oder rechteckig sind.

3. Offshore-Windenergieanlage nach einem der vorhergehenden Ansprüche, wobei die Porosität der Dämpfungsplatte (3) im Bereich der Reihe von Öffnungen zwischen 0,1 und 10 % liegt.

4. Offshore-Windenergieanlage nach einem der vorhergehenden Ansprüche, wobei die Dämpfungsplatte (3) eine Vielzahl von Zacken (6) und/oder Vorsprüngen umfasst, die regelmäßig über ihren Außenumfang verteilt sind.

5. Offshore-Windenergieanlage nach Anspruch 4, wobei die Zacken (6) und/oder die Vorsprünge im Wesentlichen rechteckig sind.

6. Offshore-Windenergieanlage nach einem der vorhergehenden Ansprüche, wobei die Dämpfungsplatte (3) an der Basis des Hauptschwimmers (2) befestigt ist.

7. Offshore-Windenergieanlage nach einem der vorhergehenden Ansprüche, wobei die Dämpfungsplatte (3) mindestens ein Versteifungselement (5) umfasst, wobei das Versteifungselement (5) von der Mitte zu dem Außenumfang der Dämpfungsplatte (3) hin angeordnet ist.

8. Offshore-Windenergieanlage nach einem der vorhergehenden Ansprüche, wobei die Dämpfungsplatte (3) aus Stahl oder Beton hergestellt ist.

9. Offshore-Windenergieanlage nach einem der vorhergehenden Ansprüche, wobei die Dämpfungsplatte (3) einen im Wesentlichen kreisförmigen, sechseckigen oder viereckigen horizontalen Querschnitt umfasst.

## Claims

1. Marine wind turbine comprising a wind turbine and a floating support (1), the floating support (1) comprising at least one main float (2) and at least one damping plate (3), the surface of the horizontal section of said damping plate (3) being greater than the surface Sc of said horizontal section of said main float (2), said damping plate (3) being fixed to said main float (2), and said damping plate (3) comprising a plurality of apertures (4), **characterized in that** said apertures (4) are evenly distributed so as to form a single row of apertures (4), said row of apertures (4) being parallel to the outer periphery of said damping plate (3), **in that** the horizontal section of said damping plate (3)(3) is variable with depth and **in that** the damping plate (3) has a minimal surface of the horizontal section strictly greater than the surface Sc of the horizontal section of the main float (2), such that only the periphery of the damping plate is variable in thickness.

2. Marine wind turbine according to Claim 1, wherein said apertures (4) are substantially circular, trapezoidal or rectangular.

3. Marine wind turbine according to either of the preceding claims, wherein the porosity of said damping plate (3) at said row of apertures is between 0.1 and 10%.

4. Marine wind turbine according to one of the preceding claims, wherein said damping plate (3) comprises a plurality of notches (6) and/or protuberances evenly distributed over its outer periphery.

5. Marine wind turbine according to Claim 4, wherein said notches (6) and/or said protuberances are substantially rectangular.

6. Marine wind turbine according to one of the preceding claims, wherein said damping plate (3) is fixed to the base of said main float (2).

7. Marine wind turbine according to one of the preceding claims, wherein said damping plate (3) comprises at least one stiffener (5), said stiffener (5) being arranged from the centre towards the outer periphery of said damping plate (3).

8. Marine wind turbine according to one of the preceding claims, wherein said damping plate (3) is made of steel or of concrete.

9. Marine wind turbine according to one of the preceding claims, wherein said damping plate (3) comprises a substantially circular, hexagonal or square horizontal section.
